# EUROPÄISCHE PATENTSCHRIFT

(11) **EP 0 840 388 B1**
(45) Veröffentlichungstag und Bekanntmachung des Hinweises auf die Patenterteilung: **24.08.2005**
(21) Anmeldenummer: 96810723.5
(22) Anmeldetag: 30.10.1996
(51) Int. Cl.: H01M 8/02, H01M 8/24

(54) **Batterie mit planaren Hochtemperatur-Brennstoffzellen**
Battery of planar high-temperature fuel cells
Batterie de piles à combustible de type plan fonctionnant à haute température

(43) Veröffentlichungstag der Anmeldung: 06.05.1998
(73) Patentinhaber: Sulzer Hexis AG, 8400 Winterthur (CH)
(72) Erfinder: Batawi, Emad, Dr., 8409 Winterthur (CH)
(74) Vertreter: Sulzer Management AG

(56) Entgegenhaltungen:
- EP-A- 0 338 823
- EP-A- 0 410 166
- EP-A- 0 432 381
- EP-A- 0 446 680
- EP-A- 0 714 147
- EP-A- 0 722 193
- WO-A-92/16029
- DE-A- 4 016 157
- DE-C- 4 443 688
- PATENT ABSTRACTS OF JAPAN vol. 016, no. 267 (E-1217), 16.Juni 1992 & JP 04 062757 A (NKK CORP), 27.Februar 1992,

## Beschreibung

Die Erfindung betrifft eine Batterie mit planaren Hochtemperatur-Brennstoffzellen.

Aus der EP-A- 0 446 680 ist eine Batterie mit stapelförmig angeordneten Hochtemperatur-Brennstoffzellen bekannt. Interkonnektoren der einzelnen Zellen sind jeweils aus einer Trennplatte und zwei Stromkollektoren zusammengesetzt. Aus der EP-A- 0 749 171 ist eine ähnliche Batterie bekannt. Die Zellen dieser Batterie umfassen jeweils eine elektrochemisch aktive Platte und einen als Luftwärmetauscher ausgebildeten, dreilagigen Interkonnektor. Die mittlere Lage des Interkonnektors besteht aus einer Platte, die eine im wesentlichen gleiche Wärmeausdehnung wie die elektrochemisch aktive Platte aufweist; die seitlichen Lagen sind aus Metallblechen gebildet, die wesentlich dünner als die Platte der mittleren Lage sind. Die Metallbleche sind reliefartig strukturiert und über eine Vielzahl von Kontaktstellen mit der mittleren Platte fest verbunden. Die seitlichen Metallbleche sind für einen direkten Kontakt mit der elektrochemisch aktiven Platte und der entsprechenden Platte einer benachbarten Zelle ausgebildet.

Wegen der hohen Betriebstemperatur und wegen der Ausbildung von Metalloxiden an der Oberfläche der Interkonnektoren müssen Legierungen verwendet werden, die mindestens aus rund 25 % Chrom bestehen und die eine Chromoxid-Schutzschicht bilden. Die Verwendung von Aluminiden, die auch bei erhöhten Temperaturen einsetzbar wären, kommen nicht in Frage. Denn Aluminimoxid ist im Gegensatz zu Chromoxid elektrisch nichtleitend. Allerdings ist mit dem Auftreten von Chromoxid der Nachteil verbunden, dass diese Verbindung bei den Betriebstemperaturen der Brennstoffzellen eine gewisse Flüchtigkeit aufweisen und sich daher auf den Elektroden der elektrochemisch aktiven Platten absetzen, was zu einer Alterung dieser Platten führt, nämlich einer Alterung in Form einer steten Verminderung des Wirkungsgrades. Dieser Problematik kann mittels geeigneter Beschichtungen begegnet werden: siehe dazu die EP-A 0 714 147 (= P.6651).

Die mittlere Lage des oben genannten Interkonnektors muss aus einer Legierung gefertigt werden, die relativ teuer ist. Es ist daher die Aufgabe der Erfindung, eine Batterie mit planaren Hochtemperatur-Brennstoffzellen zu schaffen, deren Interkonnektoren aus kostengünstigeren Werkstoffen herstellbar sind. Diese Aufgabe wird durch die in Anspruch 1 definierte Batterie gelöst.

Die Batterie mit planaren Hochtemperatur-Brennstoffzellen umfasst eine stapelförmige, alternierende Anordnung von elektrochemisch aktiven Platten und Interkonnektoren. Die Interkonnektoren sind als Luftwärmetauscher ausgebildet und weisen jeweils einen Grundkörper auf. Die Wärmeausdehung des Interkonnektors ist weitgehend durch den Grundkörper bestimmt. Jeder Grundkörper trennt eine Luftseite von einer Gasseite.

Beidseits des Grundkörpers ist jeweils eine strukturierte Lage angeordnet: nämlich eine strukturierte Lage für eine elektrische Leitung und einen Wärmetransport sowie für einen Transport von Luft beziehungsweise Brenngas entlang den elektrochemisch aktiven Platten. Die Wärmeausdehung des Grundkörpers stimmt im wesentlichen mit jener der elektrochemisch aktiven Platten überein. Jeder Grundkörper ist als Luftwärmetauscher ausgebildet und besteht aus einem Material, auf dessen Oberfläche sich bei Betriebsbedingungen der Batterie und bei Anwesenheit von Sauerstoff eine beständige Oxidschicht ausbildet. Auf der Luftseite des Grundkörpers ist die strukturierte Lage so mit dem Grundkörper verbunden, dass an den Verbindungsstellen der Grundkörper vor Oxidbildung geschützt ist.

Statt elektrochemisch aktiven Platten, die freitragende Elemente darstellen, können auch Elemente verwendet werden, die jeweils auf der gasseitig angeordneten strukturierten Lage aufgebracht und durch ein PVD- oder ein VPS-Verfahren hergestellt sind. Eine Herstellung mit dem VPS-Verfahren (Vakuum-Plasma-Spritzverfahren) ist in der EP-A- 0 635 896 beschrieben. Die Spritzschicht wird bei diesem Verfahren beispielsweise auf ein Substrat aus Metallfilz aufgebracht. Eine Herstellung mit dem PVD-Verfahren (Physical Vapor Deposition) ist in der EP-A- 0 722 193 beschrieben. Als Substrat wird bei diesem Verfahren mit Vorteil eine elektrisch leitende keramische Schaumstruktur verwendet.

Als Material für den Grundkörper des Interkonnektors kommen solche Legierungen in Frage, wie sie in Anspruch 2 und insbesondere in Anspruch 10 angegebenen sind. Die abhängigen Ansprüche 3 bis 9 beziehen sich auf vorteilhafte Ausführungsformen der erfindungsgemässen Batterie.

Dank der Ausbildung einer schützenden Schicht aus Aluminium- und/oder Siliziumoxid muss der Grundkörper nicht beschichtet werden. Die strukturierte Lage auf der Luftseite des Interkonnektors muss aus einem dünnen, duktilen Metallblech hergestellt werden. In der EP-A- 0 749 171 sind Beispiele für derartige strukturierte Lagen beschrieben. Diese bestehen aus Nickelbasislegierungen, die Chrom enthalten und die in einer oxidierenden Umgebung flüchtige Chromoxide bilden; daher muss auf der Oberfläche eine Schutzschicht - beispielsweise aus einem keramischen, elektrisch leitenden Stoff, insbesondere Manganite (La,Ca,Sr)MnO3, Chromit (La,Sr)CrO₃ oder Kobaltit (La,Sr)CoO₃ - aufgebracht werden. Auf der Gasseite kann ein gleiches Blech wie auf der Luftseite verwendet werden; hier ist jedoch dank der reduzierenden Umgebung des Gases keine Schutzschicht nötig.

Nachfolgend wird die Erfindung anhand der Zeichnungen erläutert. Es zeigen:
Fig. 1 einen Ausschnitt aus dem Interkonnektor einer erfindungsgemässen Brennstoffzellen-Batterie,
Fig. 2 einen Schnitt durch eine Brennstoffzelle einer erfindungsgemässen Batterie und
Fig. 3 ein Beispiel einer strukturierten Lage für die Gasseite des Interkonnektors.

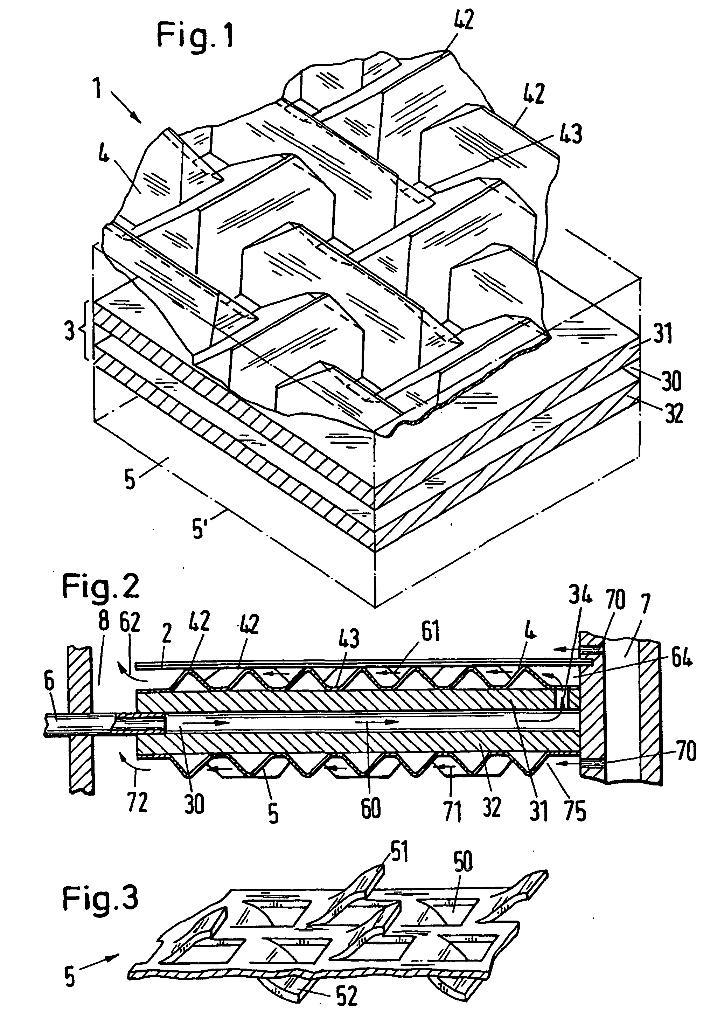

Der Interkonnektor 1 in Fig.1 umfasst einen Grundkörper 3, eine auf der Luftseite angeordnete strukturierte Lage 4 und eine auf der Gasseite angeordnete strukturierte Lage 5. Die Lage 5 ist in Fig. 1 nicht dargestellt; lediglich deren äussere Grenzfläche 5' ist strichpunktiert angegeben. Die beiden Lagen 4 und 5 können - vgl. Fig.2 - gleich ausgebildet sein. Auf der Luftseite des Grundkörpers 3 ist die strukturierte Lage 4 so mit dem Grundkörper 3 verbunden, dass dieser an Verbindungsstellen 43 vor Oxidbildung geschützt ist.

Die strukturierte Lage 4 der Fig.1 besteht aus einem dünnen Metallblechen, das eine durch Tiefziehen erzeugte Reliefstruktur aufweist. Die Reliefstruktur umfasst noppenartige Strukturelemente 43 und kammartige Strukturelemente 42, die auf den beiden Seiten einer Mittelebene jeweils eine regelmässige Anordnung von Vorsprüngen bilden. Weitere Beispiele für günstige Reliefstrukturen sind aus der oben genannten EP-A- 0 749 171 bekannt.

Das Blech 4 ist auf dem Grundkörper 3 an den noppenartigen Vorsprüngen 43 befestigt, mit Vorteil aufgelötet. Die Lötstellen müssen frei von Aluminium- oder Siliziumoxiden sein und dies auch bleiben, so dass die Verbindungen zwischen dem Grundkörper 3 und den Vorsprüngen 43 elektrisch leitend sind.

Der Grundkörper 3 mit Seitenwänden 31, 32 und einem Hohlraum 30 ist als Wärmetauscher für die in die Brennstoffzellen eingespeiste Luft ausgebildet. Der Hohlraum 30 kann gekammert sein und/oder ein Kanalsystem aufweisen. Erfindungsgemäss besteht der Grundkörper 3 aus einem Material, auf dessen Oberfläche sich bei den Betriebsbedingungen der Batterie und bei Anwesenheit von Sauerstoff eine beständige Oxidschicht ausbildet.

Die erfindungsgemässe Batterie mit planaren Brennstoffzellen umfasst eine stapelförmige, alternierende Anordnung von Interkonnektoren 1 und elektrochemisch aktiven Platten 2, sogenannte "PEN-Elemente" (Positive Elektrode / Feststoff-Elektrolyt / Negative Elektrode). Die Schnittzeichnung der Fig.2 zeigt ein PEN-Element 2 mit dem darunter angeordneten Interkonnektor 1, dessen strukturierten Lagen 4 und 5 die in Fig.1 dargestellte Reliefstruktur aufweisen.

Die strukturierten Lage 4, 5 ermöglichen einerseits eine elektrische Leitung und einen Wärmetransport hauptsächlich in Richtung der Stapelachse, andererseits einen Transport von Luft (Pfeil 61, Reaktionsraum 64) beziehungsweise Brenngas (Pfeil 71, Reaktionsraum 75) entlang den PEN-Elementen 2.

Die elektrische Leitung zwischen den PEN-Elementen 2 und den Interkonnektoren 2 findet an den Kontaktstellen statt, die durch die Erhebungen 42 hergestellt werden. Der Wärmetransport erfolgt durch Strahlung und Wärmeleitung. Die Luft wird über eine Vielzahl von Röhrchen 6 in den Hohlraum 30 des Grundkörpers 3 eingespeist. Das Brenngas gelangt auf der gegenüberliegenden Seite über einen Verteiler 7 und Bohrungen 70 in die Gas-Reaktionsräume 75 der Brennstoffzellen. Nach Durchströmen des Hohlraums 30 (Pfeil 60) und gleichzeitiger Wärmeaufnahme gelangt die Luft über Durchbrüche 34 auf der Seite des Gasverteilers 7 in den Luft-Reaktionsraum 64 der Brennstoffzelle. Die Luft und das Gas strömen unter Antreiben der energieliefernden Prozesse an den Oberflächen des PEN-Elements 2 in gleicher Richtung und treten schliesslich in einen Sammelkanal 8 aus (Pfeile 62, 72). Das Gasgemisch des Sammelkanals 8 kann einer Nachverbrennung zugeführt werden; oder eine Nachverbrennung kann im Kanal 8 selbst stattfinden.

Die Wärmeausdehung des Interkonnektors 1 ist weitgehend durch den Grundkörper 3 bestimmt und die Wärmeausdehung des Grundkörpers stimmt im wesentlichen mit jener der elektrochemisch aktiven Platte 2 überein.

Die luftseitig angeordnete strukturierte Lage 4 muss auf der Aussenseite eine elektrisch leitende Schutzschicht aufweisen, die eine Barriere gegen eine Freisetzung von Chromoxid bildet. Für die gasseitig angeordnete Lage 5 ist eine derartige Schutzschicht nicht nötig. Diese Lage 5 kann auch Durchbrüche aufweisen. Sie kann beispielsweise gitterartig strukturiert sein oder eine poröse Struktur aufweisen und insbesondere aus einem Metallfilz oder Metallfilzteilen bestehen. Fig.3 zeigt ein weiteres Beispiel: ein Blech mit durch Stanzen gewonnenen Durchbrüchen 50 und beidseitig ausgebogenen Zungen 51 und 52, mit denen die Kontakte zu den Grundkörpern 3 beziehungsweise den PEN-Elementen 2 hergestellt werden.

Die Batterie kann einen im wesentlichen zentralsymmetrischen Aufbau haben: ein zentraler axialer Verteiler 7 für das Brenngas im Zentrum des Stapels, Luftzuführstellen 6 an der Peripherie der Grundkörper 3.

Die Batterie kann auch einen im wesentlichen quaderförmigen Aufbau haben: ein Verteiler 7 für das Brenngas auf der einen Seite der Anordnung und dem Gasverteiler 7 gegenüberliegend Luftzuführstellen 6, die derart angeordnet sind, dass in den Grundkörpern 3 die Luft 60 entgegengesetzt zur Gasströmung 71 fliesst. Eine derartige Batterie mit quaderförmigem Aufbau ist beispielsweise aus der DE-A 44 31 510 bekannt.

Das Material der Grundkörper 3 besteht mit Vorteil aus einer ferritischen Legierung, die Aluminium, Chrom sowie Eisen oder Silizium, Chrom sowie Eisen gemäss einer der nachfolgenden Zusammensetzungen - in Gewichtsprozenten angegeben - enthält:
a) 22% Cr / 5-8% Al / Rest Fe,
b) 13-15% Cr / 3.5-5% Al / Rest Fe,
c) 3-5% Si / 3-5% Cr / Rest Fe oder
d) 2-4% Si / 8-12% Cr / Rest Fe.

Die Wärmeausdehung des Materials der Grundkörper 3 sollte sich höchstens um rund 3·10⁻⁶ K⁻¹ von jener der elektrochemisch aktiven Platte 2 unterscheiden.

## Patentansprüche

1. Batterie mit planaren Hochtemperatur-Brennstoffzellen, eine stapelförmige, alternierende Anordnung von elektrochemisch aktiven Elementen (2) und Interkonnektoren (1) umfassend, wobei jeder Interkonnektor einen Luftreaktionsraum (64) von einer Gasseite trennt, jeder Interkonnektor einen Grundkörper (3) aufweist, dessen Wärmeausdehung weitgehend jene des Interkonnektors bestimmt, beidseits des Grundkörpers jeweils eine strukturierte Lage (4, 5) angeordnet ist - nämlich eine strukturierte Lage für eine elektrische Leitung und einen Wärmetransport sowie für einen Transport von Luft beziehungsweise Brenngas entlang den elektrochemisch aktiven Elementen - und die Wärmeausdehung des Grundkörpers im wesentlichen mit jener der elektrochemisch aktiven Elemente übereinstimmt, und der Grundkörper mit einem Hohlraum als Luftwärmetauscher ausgebildet ist, in dem Luft beim Durchströmen vor einer Zuführung in den Luftreaktionsraum durch Wärmeaufnahme vorwärmbar ist, wobei ferner der Grundkörper aus einem Material besteht, auf dessen Oberfläche sich bei Betriebsbedingungen der Batterie und bei Anwesenheit von Sauerstoff eine beständige Oxidschicht ausbildet, und auf der Luftseite des Grundkörpers die strukturierte Lage (4) so mit dem Grundkörper verbunden ist, dass an den Verbindungsstellen (43) der Grundkörper vor Oxidbildung geschützt ist.

2. Batterie nach Anspruch 1, **dadurch gekennzeichnet, dass** das Material des Grundkörpers (3) eine bei hohen Temperaturen beständige Legierung ist, die Aluminium und/oder Silizium enthält, und dass die sich ausbildende Oxidschicht aus Aluminiumoxid beziehungsweise Siliziumoxid besteht.

3. Batterie nach Anspruch 1 oder 2, **dadurch gekennzeichnet, dass** die luftseitig angeordnete strukturierte Lage (4) auf dem Grundkörper (3) aufgelötet ist.

4. Batterie nach einem der Ansprüche 1 bis 3, **dadurch gekennzeichnet, dass** die luftseitig angeordnete strukturierte Lage (4) und mit Vorteil auch die gasseitig angeordnete strukturierte Lage (5) aus dünnen Metallblechen mit jeweils einer Reliefstruktur bestehen, und dass aufgrund der Reliefstruktur die Metallbleche keinen wesentlichen Einfluss auf die Wärmeausdehung des Interkonnektors (1) haben.

5. Batterie nach Anspruch 4, **dadurch gekennzeichnet, dass** die Reliefstruktur noppen- und/oder kammartige Strukturelemente umfasst, die auf beiden Seiten einer Mittelebene jeweils eine regelmässige Anordnung von Vorsprüngen (42, 43) bilden.

6. Batterie nach Anspruch 4 oder 5, **dadurch gekennzeichnet, dass** die luftseitig angeordnete strukturierte Lage (4) auf der Aussenseite eine elektrisch leitende Schutzschicht aufweist, die insbesondere eine Barriere gegen eine Freisetzung von Chromoxid bildet.

7. Batterie nach einem der Ansprüche 1 bis 6, **dadurch gekennzeichnet, dass** die gasseitig angeordnete strukturierte Lage (5) gitterartig strukturiert ist oder eine poröse Struktur aufweist und insbesondere aus einem Metallfilz oder Metallfilzteilen oder aus einer elektrisch leitenden keramischen Schaumstruktur besteht.

8. Batterie nach Anspruch 7, **dadurch gekennzeichnet, dass** die elektrochemisch aktiven Elemente jeweils auf der gasseitig angeordneten strukturierten Lage aufgebracht und durch ein PVD- oder ein VPS-Verfahren hergestellt sind.

9. Batterie nach einem der Ansprüche 1 bis 8, **dadurch gekennzeichnet, dass** die stapelförmige Anordnung einen im wesentlichen zentralsymmetrischen Aufbau hat und dass ein zentraler axialer Verteiler (7) für das Brenngas sowie Luftzuführstellen (6) an der Peripherie der Grundkörper (3) vorgesehen sind.

10. Batterie nach einem der Ansprüche 1 bis 8, **dadurch gekennzeichnet, dass** die stapelförmige Anordnung einen im wesentlichen quaderförmigen Aufbau hat, dass ein Verteiler (7) für das Brenngas auf der einen Seite der Anordnung vorgesehen ist und dass dem Gasverteiler gegenüberliegend Luftzuführstellen (6) derart angeordnet sind, dass in den Grundkörpern (3) die Luft (60) entgegengesetzt zur Gasströmung (71) fliesst.

11. Batterie nach einem der Ansprüche 1 bis 10, **dadurch gekennzeichnet, dass** das Material der Grundkörper (3) eine ferritische Legierung ist und Aluminium, Chrom sowie Eisen oder Silizium, Chrom sowie Eisen gemäss einer der nachfolgenden Zusammensetzungen - in Gewichtsprozenten - enthält:
a) 22% Cr / 5-8% Al / Rest Fe,
b) 13-15% Cr / 3.5-5% Al / Rest Fe,
c) 3-5% Si / 3-5% Cr / Rest Fe oder
d) 2-4% Si / 8-12% Cr / Rest Fe.

12. Batterie nach einem der Ansprüche 1 bis 10, **dadurch gekennzeichnet, dass** die Wärmeausdehung des Grundkörpermaterials (3) sich höchstens um rund 3·10⁻⁶ K⁻¹ von jener der elektrochemisch aktiven Platte (2) unterscheidet.

## Claims

1. Battery with planar high temperature fuel cells, including a stack-like, alternating arrangement of electrochemically active elements (2) and interconnectors (1), with each interconnector separating an air reaction chamber (64) from a gas side, with each interconnector having a basic body (3) the thermal expansion of which largely determines that of the interconnector, with a respective structured layer (4, 5) being arranged on each of the two sides of the basic body - namely a structured layer for electrical conduction and heat transport as well as for a transport of air and of combustion gas respectively along the electrochemically active elements - and with the thermal expansion of the basic body substantially corresponding to that of the electrochemically active elements, and with each basic body being formed as an air heat exchanger in which air can be preheated by heat take-up prior to being supplied into the air reaction chamber, wherein the basic body further consists of a material on whose surface a durable oxide layer forms under the operating conditions of the battery and in the presence of oxygen; and wherein the structured layer (4) is bonded to the basic body on the air side of the basic body in such a manner that the basic body is protected against oxide formation at the connection points (43).

2. Battery in accordance with claim 1 **characterised in that** the material of the basic body (3) is an alloy which is resistant to high temperatures and which contains aluminium and/or silicon; and **in that** the oxide layer forming consists of aluminium oxide or silicon oxide.

3. Battery in accordance with claim 1 or claim 2 **characterised in that** the structured layer (4) arranged at the air side is soldered onto the basic body (3).

4. Battery in accordance with any one of the claims 1 to 3 **characterised in that** the structured layer (4) arranged at the air side and with advantage also the structured layer (5) arranged at the gas side consist of thin metal sheets with a relief structure in each case; and **in that**, as a result of the relief structure, the metal sheets have no substantial influence on the thermal expansion of the interconnector (1).

5. Battery in accordance with claim 4 **characterised in that** the relief structure comprises knob-like and/or comb-like structure elements, which in each case form a regular arrangement of projections (42, 43) on both sides of a central plane.

6. Battery in accordance with claim 4 or claim 5 **characterised in that** the structured layer (4) arranged at the air side has an electrically conductive protective layer at the outer side which in particular forms a barrier against the liberation of chromium oxide.

7. Battery in accordance with any one of the claims 1 to 6 **characterised in that** the structured layer (5) arranged at the gas side is structured in the shape of a grid or has a porous structure and in particular consists of a metallic felt or of metallic felt parts or of an electrically conductive ceramic foam structure.

8. Battery in accordance with claim 7 **characterised in that** the electrochemically active elements are attached in each case to the structured layer arranged on the gas side and are manufactured by a PVD process or a VPS process.

9. Battery in accordance with any one of the claims 1 to 8 **characterised in that** the stack-shaped arrangement has a substantially centrally symmetrical construction; and **in that** a central axial distributor (7) is provided for the combustion gas as well as air supply points (6) at the periphery of the basic body (3).

10. Battery in accordance with any one of the claims 1 to 8 **characterised in that** the stack-shaped arrangement has a construction which is substantially in the form of a parallelepiped; **in that** a distributor (7) is provided on the one side of the arrangement for the combustion gas; and **in that** air supply points (6) are arranged lying opposite to the gas distributor in such a manner that the air (60) flows into the basic bodies (3) in a direction opposite to the gas flow (71).

11. Battery in accordance with any one of the claims 1 to 10 **characterised in that** the material of the basic body (3) is a ferritic alloy and contains aluminium, chromium as well as iron, or silicon, chromium and also iron in accordance with one of the following compositions - specified in percentage by weight -:
a) 22% Cr / 5-8% Al / remainder Fe,
b) 13-15% Cr / 3.5-5% Al / remainder Fe,
c) 3-5% Si / 3-5% Cr/ remainder Fe, or
d) 2-4% Si / 8-12% Cr / remainder Fe.

12. Battery in accordance with any one of the claims 1 to 10 **characterised in that** the coefficient of thermal expansion of the basic body material (3) differs by at most about 3·10⁻⁶ K⁻¹ from that of the electrochemicadly active plate (2).

## Revendications

1. Batterie avec des piles de combustible planes à haute température, comprenant un agencement alternant en forme de piles d'éléments (2) électrochimiquement actifs et d'interconnecteurs (1), où chaque interconnecteur sépare une enceinte de réaction d'air (64) d'un côté gaz, chaque interconnecteur présente un corps de base (3) dont la dilatation thermique détermine dans une grande mesure celle de l'interconnecteur, est disposée des deux côtés du corps de base à chaque fois une couche structurée (4, 5), à savoir une couche structurée pour une ligne électrique et un transport de chaleur ainsi que pour un transport d'air respectivement de gaz de combustion le long des éléments électrochimiquement actifs, et la dilatation thermique du corps de base coïncide essentiellement avec celle des éléments électrochimiquement actifs, et le corps de base est réalisé avec un espace creux comme échangeur de chaleur d'air, dans lequel l'air, lors du passage devant une amenée dans l'enceinte de réaction d'air, peut être préchauffé par absorption de chaleur, où en outre le corps de base est constitué d'un matériau sur la surface duquel, lors des conditions de fonctionnement de la batterie et en présence d'oxygène, se forme une couche d'oxyde permanente, et au côté d'air du corps de base, la couche structurée (4) est reliée au corps de base de façon qu'aux emplacements de liaison (43), le corps de base est protégé contre une formation d'oxyde.

2. Batterie selon la revendication 1, **caractérisée en ce que** le matériau du corps de base (3) est un alliage permanent à des températures élevées qui contient de l'aluminium et/ou du silicium, et **en ce que** la couche d'oxyde formée est constituée d'oxyde d'aluminium respectivement d'oxyde de silicium.

3. Batterie selon la revendication 1 ou 2, **caractérisée en ce que** la couche structurée (4) disposée côté air est brasée sur le corps de base (3).

4. Batterie selon l'une des revendications 1 à 3,
**caractérisée en ce que** la couche structurée (4) disposée côté air et avantageusement également la couche structurée (5) disposée côté gaz sont constituées de tôles métalliques minces avec à chaque fois une structure en relief, et **en ce qu'**en raison de la structure en relief, les tôles métalliques n'ont pas d'effet important sur la dilatation thermique de l'interconnecteur (1).

5. Batterie selon la revendication 4, **caractérisée en ce que** la structure en relief présente des éléments structurels en forme de téton et/ou de peigne qui forment aux deux côtés d'un plan médian à chaque fois un agencement régulier de saillies (42, 43).

6. Batterie selon la revendication 4 ou 5, **caractérisée en ce que** la couche structurée (4) disposée côté air présente au côté extérieur une couche de protection électriquement conductrice qui forme en particulier une barrière contre une libération d'oxyde de chrome.

7. Batterie selon l'une des revendications 1 à 6,
**caractérisée en ce que** la couche structurée (5) disposée côté gaz est structurée en forme de treillis ou présente une structure poreuse et est constituée en particulier d'un feutre métallique ou de parties de feutre métallique ou en une structure de mousse céramique électriquement conductrice.

8. Batterie selon la revendication 7, **caractérisée en ce que** les éléments électrochimiquement actifs sont disposés à chaque fois sur le côté structuré disposé côté gaz et sont fabriqués par un procédé PVD ou VPS.

9. Batterie selon l'une des revendications 1 à 8,
**caractérisée en ce que** l'agencement en forme de pile a une structure sensiblement symétrique centrale, et **en ce qu'**un distributeur axial central (7) pour le gaz de combustion ainsi que des emplacements d'amenée d'air (6) sont prévus à la périphérie des corps de base (3).

10. Batterie selon l'une des revendications 1 à 8,
**caractérisée en ce que** l'agencement en forme de pile a une structure sensiblement parallélépipédique, **en ce qu'**un distributeur (7) du gaz de combustion est prévu sur un côté de l'agencement, et **en ce que**, en face du distributeur de gaz, des emplacements d'amenée d'air (6) sont disposés de façon que dans les corps de base (3), l'air (60) s'écoule contrairement au flux de gaz (71).

11. Batterie selon l'une des revendications 1 à 10,
**caractérisée en ce que** le matériau des corps de base (3) est un alliage ferritique et contient de l'aluminium, du chrome ainsi que du fer ou du silicium, du chrome ainsi que du fer selon l'une des compositions suivantes, en pour cent en poids:
a) 22% Cr / 5-8% Al / reste Fe,
b) 13-15% Cr / 3,5-5% Al / reste Fe,
c) 3-5% Si / 3-5% Cr / reste Fe ou
d) 2-4% Si / 8-12% Cr / reste Fe.

12. Batterie selon l'une des revendications 1 à 10,
**caractérisée en ce que** la dilatation thermique du matériau (3) du corps de base se différencie au plus selon environ 3x10⁻⁶ K⁻¹ de celle de la plaque électrochimiquement active (2) .
